# EUROPÄISCHE PATENTANMELDUNG

(11) **EP 1 598 651 A2**
(43) Veröffentlichungstag der Anmeldung: **23.11.2005**
(21) Anmeldenummer: 05008910.1
(22) Anmeldetag: 22.04.2005
(51) Int. Cl.: G01L 23/22

(54) **Druckmessglühkerze**

(30) Priorität: 17.05.2004 DE 102004024341
(71) Anmelder: Beru AG, 71636 Ludwigsburg (DE)
(72) Erfinder: Heinzelmann, Stefan, 74388 Talheim (DE); Pechhold, Frank, 71642 Ludwigsburg (DE); Marto, Arno, 71263 Weil der Stadt (DE)
(74) Vertreter: Pohlmann, Eckart

(57) **Zusammenfassung**

Druckmessglühkerze für einen Dieselmotor mit einem Kerzenkörper (2) zum Einsetzen in einen Zylinder des Dieselmotors, einem Heizstab (1), der im Kerzenkörper (2) angeordnet ist, und einem Drucksensor (3), der unter einer Vorspannung zwischen dem Heizstab (1) und dem Kerzenkörper (2) angeordnet ist, derart, dass der Drucksensor (3) durch den im Brennraum des Zylinders herrschenden Druck beaufschlagt wird. Der Heizstab (1) ist in axialer Richtung gleitend verschiebbar im Kerzenkörper (2) angeordnet und überträgt den Druck im Brennraum des Zylinders auf den Drucksensor (3). Der Drucksensor (3) ist auf einer fest mit dem Heizstab (1) verbundenen Heizstabauflage (1a) im Innenraum einer fest mit dem Kerzenkörper (2) verbundenen Kappe (4) angeordnet, derart, dass die Anordnung aus Heizstabauflage (1a) und Drucksensor (3) ein axiales Spiel im Innenraum der Kappe (4) hat.

## Beschreibung

Die Erfindung betrifft eine Druckmessglühkerze für einen Dieselmotor mit einem Kerzenkörper zum Einsetzen in einen Zylinder des Dieselmotors, einem Heizstab, der im Kerzenkörper angeordnet ist, und einem Drucksensor, der unter einer Vorspannung zwischen dem Heizstab und dem Kerzenkörper angeordnet ist, derart, dass der Drucksensor durch den im Brennraum des Zylinders herrschenden Druck beaufschlagt wird, der vom Heizstab übertragen wird.

Eine derartige Druckmessglühkerze ist aus der EP 1 096 141 A3 bekannt.

Bei dieser bekannten Druckmessglühkerze sind der Kerzenkörper und der Heizstab brennraumseitig fest miteinander verbunden und hat der Kerzenkörper eine Festigkeit derart, dass er sich beim Anliegen eines Druckes elastisch radial verformen kann. Der Druck im Brennraum des Zylinders wirkt auf den Kerzenkörper und den Heizstab, so dass sich der Kerzenkörper, der fest im Zylinder der Brennkraftmaschine sitzt, elastisch verformt, während sich der Heizstab axial relativ zum Kerzenkörper bewegt. Durch diese axiale Relativbewegung zum Kerzenkörper wird der unter einer Vorspannung stehende Drucksensor entlastet, wobei der Unterschied im Ladungszustand zwischen dem belasteten und dem entlasteten Zustand als Signal für den im Brennraum herrschenden Druck abgenommen und ausgewertet wird.

Der Zweck einer derartigen Druckmessglühkerze besteht darin, einerseits als Kaltstarthilfe zum Starten des Dieselmotors bei tiefen Temperaturen bzw. zum Zwischenglühen bei ungünstigen Betriebsverhältnissen zu sorgen und andererseits durch den Drucksensor, der z.B. aus einer Piezokeramik oder einem Dehnungsmessstreifen bestehen kann, Informationen über den Verbrennungsablauf im Zylinder zu erhalten, diese auszuwerten und den Verbrennungsablauf dementsprechend zu steuern. Durch den Einsatz einer derartigen Druckmessglühkerze ergibt sich ein Dieselmotor, der in Hinblick auf die Reduzierung der Abgase und des Verbrauchs regelbar ist.

Bei einer derartigen Druckmessglühkerze wird nicht nur der im Zylinder gebildete Druck über den Heizstab an den Drucksensor weitergegeben, sondern werden auch durch Temperaturschwankungen oder thermischen Belastungen der Glühkerze hervorgerufen durch Glühen, durch Umgebungstemperaturschwankungen usw. bedingte mechanische Kräfte an den Drucksensor weitergegeben, der dann seine Eigenschaften, insbesondere seine Vorspannung ändert, was zu Messfehlern führen kann.

Durch die Erfindung soll eine Druckmessglühkerze der eingangs genannten Art geschaffen werden, bei der eine mechanische Temperaturkompensation des Sensors möglich ist.

Die erfindungsgemäße Druckmessglühkerze soll insbesondere so ausgebildet sein, dass auf den Drucksensor kein merklicher Druck durch ein Anzugsmoment, durch thermische Schwankungen oder mechanische Vibrationen ausgeübt wird.

Diese Aufgabe wird gemäß der Erfindung dadurch gelöst, dass der Drucksensor auf einer fest mit dem Heizstab verbundenen Auflage im Innenraum einer fest mit dem Kerzenkörper verbundenen Kappe angeordnet ist, derart, dass die Anordnung aus Auflage und Sensor ein axiales Spiel im Innenraum der Kappe hat.

Besonders bevorzugte Ausgestaltungen und Weiterbildungen der erfindungsgemäßen Druckmessglühkerze sind Gegenstand der Ansprüche 2 bis 6.

Im Folgenden werden anhand der zugehörigen Zeichnung besonders bevorzugte Ausführungsbeispiele der Erfindung näher beschrieben. Es zeigen
Fig. 1 ein Ausführungsbeispiel in einer Schnittansicht und
Fig. 2 eine Schnittansicht eines weiteren Ausführungsbeispiels.

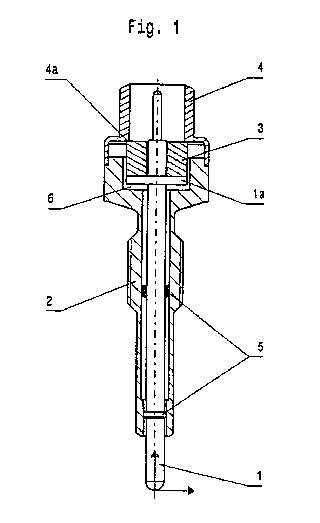

Das in Fig. 1 dargestellte Ausführungsbeispiel der erfindungsgemäßen Druckmessglühkerze weist einen Kerzenkörper oder ein Gehäuse 2 auf, in dem ein Heizstab 1 so angeordnet ist, dass er brennraumseitig vom Kerzenkörper 2 vorsteht. Der Kerzenkörper 2 wird in einen Zylinder des Dieselmotors eingesetzt.

Ein Drucksensor 3 ist unter einer Vorspannung zwischen dem Heizstab 1 und dem Kerzenkörper 2 so angeordnet, dass der Drucksensor 3 durch den im Brennraum des Zylinders herrschenden Druck beaufschlagt wird. Dazu ist der Heizstab 1 in axialer Richtung gleitend verschiebbar im Kerzenkörper 2 angeordnet, so dass er den Druck im Brennraum des Zylinders auf den Drucksensor 3 überträgt.

Wie es im Einzelnen in der Fig. 1 dargestellt ist, ist der Drucksensor 3 auf einer Heizstabauflage 1a angeordnet, die fest mit dem Heizstab 1 verbunden ist. Die Anordnung aus Drucksensor 3 und Heizstabauflage 1a ist im Inneren einer Kappe 4 angeordnet, die eine axiale Höhe 4a hat und fest mit dem Kerzenkörper 2, beispielsweise durch Schweißen verbunden ist. Die Innenfläche der Oberseite der Kappe 4 bildet einen Fixpunkt, an den der Drucksensor 3 durch den beweglich angeordneten Heizstab 1 gedrückt wird, wenn der im Zylinder gebildete Druck über den Heizstab 1 und die Heizstabauflage 1a an den Drucksensor 3 weitergegeben wird.

Wenn durch Glühen, Umgebungstemperaturschwankungen usw. thermische Belastungen an der Glühkerze liegen, kommt es aufgrund der verschiedenen Wärmeausdehnungskoeffizienten der Bauteile zu verschiedenen Vorspannungen am Drucksensor 3 und somit zu Messfehlern des Drucksensors 3.

Wie es in Fig. 1 dargestellt ist, ist zur Temperaturkompensation ein Kompensationsspalt 6 unter der Heizstabauflage 1a vorgesehen, d. h. ist die axiale Höhe 4a des Innenraums der Kappe 4 so gestaltet, dass sie größer als die axiale Höhe der Anordnung aus Drucksensor 3 und Heizstabauflage 1a ist. Dieser Kompensationsspalt 6 ermöglicht es, Ausdehnungen in Folge verschiedener Wärmeausdehnungskoeffizienten des Drucksensors 3, der Kappe 4 bzw. des Kerzengehäuses 2 und der Heizstabauflage 1a zu kompensieren.

Während bei dem in Fig. 1 dargestellten Ausführungsbeispiel der Kompensationsspalt durch die axiale Höhe 4a der Kappe 4 gebildet ist, kann dieser Spalt auch durch einen mechanischen Anschlag definiert sein, der in der Kappe 4 vorgesehen ist.

Bei der oben beschriebenen Anordnung sollte jedoch ein Luftspalt zwischen der Heizstabauflage 1a und dem Drucksensor 3 vermieden werden, da es ansonsten zwischen diesen beiden Bauteilen zu einem Klopfen kommen könnte.

Um das zu verhindern, ist der Heizstab 1 mechanisch in Richtung auf den Drucksensor 3 vorgespannt, wobei für diese Vorspannung ein Wert ausreicht, der so gering ist, dass er das Drucksignal nicht oder nur unmerklich beeinflusst.

Diese Vorspannung wird durch Federelemente 5 erzeugt, die am Heizstab 1 angeordnet sind, wie es in der Zeichnung dargestellt ist.

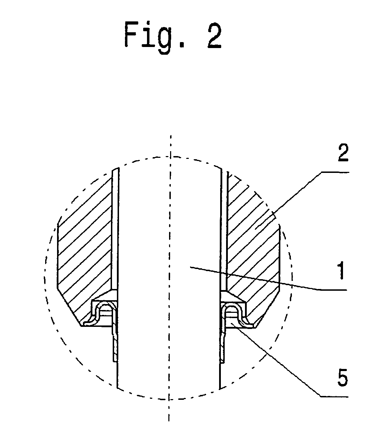

Als Federelemente kommen O-Ringe (Fig. 1), eine Membran (Fig. 2) sowie eine zusätzliche Spiralfeder in Frage.

Durch diese Ausbildung wird eine direkte Übertragung des Drucks auf den Drucksensor 3 ohne dazwischen angeordnete Dämpfungselemente erzielt, die ihrerseits das Drucksignal verfälschen könnten.

Da Werkstückstoleranzen automatisch ausgeglichen werden, ist darüber hinaus die mechanische Reproduzierbarkeit erheblich vereinfacht.

Da bei der erfindungsgemäßen Druckmessglühkerze eine sozusagen schwimmende Lagerung des Drucksensors 3 vorgesehen ist, lassen sich unterschiedliche Dehnungen aufgrund verschiedener Wärmeausdehnungskoeffizienten der Materialien der Bauteile und Fertigungstoleranzen problemlos kompensieren. Der mechanische Aufbau ist dadurch wesentlich einfacher und es kommt zu keinen merklichen Drucksignalverfälschungen.

Die Vorspannung des Heizstabes 1 lässt sich dabei durch verschiedenartige Federelemente und deren Auslegung beliebig gestalten, wobei keine weiteren Bauteile zusätzlich zu bisher üblichen Konstruktionen benötigt werden.

## Patentansprüche

1. Druckmessglühkerze für einen Dieselmotor mit
- einem Kerzenkörper zum Einsetzen in einen Zylinder des Dieselmotors,
- einem Heizstab, der im Kerzenkörper angeordnet ist, und
- einem Drucksensor, der unter einer Vorspannung zwischen dem Heizstab und dem Kerzenkörper angeordnet ist, derart, dass der Drucksensor durch den im Brennraum des Zylinders herrschenden Druck beaufschlagt wird, der vom Heizstab übertragen wird, **dadurch gekennzeichnet, dass**
- der Heizstab in axialer Richtung gleitend verschiebbar im Kerzenkörper angeordnet ist und
- der Drucksensor (3) auf einer fest mit dem Heizstab (1) verbundenen Heizstabauflage (1a) im Innenraum einer fest mit dem Kerzenkörper (2) verbundenen Kappe (4) angeordnet ist, derart, dass die Anordnung aus Heizstabauflage (1a) und Drucksensor (3) ein axiales Spiel im Innenraum der Kappe (4) hat.

2. Druckmessglühkerze nach Anspruch 1, **dadurch gekennzeichnet, dass** der Heizstab (1) mit Heizstabauflage (1a) axial gegen den Drucksensor (3) vorgespannt ist.

3. Druckmessglühkerze nach Anspruch 2, **dadurch gekennzeichnet, dass** die Vorspannung durch ein Federelement erzeugt ist, das am Heizstab (1) angeordnet ist.

4. Druckmessglühkerze nach Anspruch 3, **dadurch gekennzeichnet, dass** das Federelement (5) ein O-Ring ist.

5. Druckmessglühkerze nach Anspruch 3, **dadurch gekennzeichnet, dass** das Federelement (5) eine Federmembran ist.

6. Druckmessglühkerze nach Anspruch 3, **dadurch gekennzeichnet, dass** das Federelement eine Spiralfeder ist.
